# EUROPEAN PATENT APPLICATION

(11) **EP 1 679 491 A1**
(43) Date of publication of application: **12.07.2006**
(21) Application number: 04793009.4
(22) Date of filing: 27.10.2004
(51) Int. Cl.: G01D 5/14, G01B 7/30, F02D 9/00, F02D 35/00

(54) **ROTATION ANGLE DETECTION DEVICE**

(30) Priority: 29.10.2003 JP 2003368811
(71) Applicant: Mitsuba Corporation, Kiryu-shi, Gunma 376-8555 (JP)
(72) Inventor: OOTAWARA, Masahiro, MITSUBA Corporation, Kiryu-shi, Gunma 3768555 (JP); KAWAMURA, Mikio, MITSUBA Corporation, Kiryu-shi, Gunma 3768555 (JP); NEGISHI, Satoru, MITSUBA Corporation, Kiryu-shi, Gunma 3768555 (JP); TAKAKUSAGI, Ryuichi, MITSUBA Corporation, Kiryu-shi, Gunma 3768555 (JP)
(74) Representative: HOFFMANN EITLE
(86) International application number: PCT/JP2004/015897
(87) International publication number: WO 2005/040730

(57) **Abstract**

Yoke plates 3a, 3b of magnetic material rotating in synchronization with a rotary shaft 2 are provided. An axially magnetized magnet 5 is disposed opposite to the yoke plates 3a, 3b through an air gap G1. The outer diameter R1 of the yoke plates 3a, 3b is larger than the outer diameter R2 of the magnet 5. The magnet 5 is fixed to a fixing plate 6 of magnetic material. Hall ICs 9a, 9b are attached to the front ends of the pole pieces 8a, 8b of the fixing plate 6. The Hall ICs 9a, 9b are disposed in a magnetic path M formed by the magnet 5. When the rotary shaft 2 rotates, the opposed areas S1, S2 between the magnet 5 and yoke plates 3a, 3b change, so that the density of magnetic flux passing through the Hall ICs 9a, 9b in the magnetic path M linearly changes in proportion to the rotation angle. The Hall ICs 9a, 9b catch this change and detect the rotation angle of the rotary shaft 2. Thereby, the cost of production of the rotation angle detection device is reduced without deteriorating the detection accuracy.

## Description

### Technical Field

The present invention relates to a rotation angle detection device which detects the rotation angle of an object to be detected and, more particularly, to a technique effectively applied to a detection device for detecting the open degree of an engine throttle valve.

### Background Art

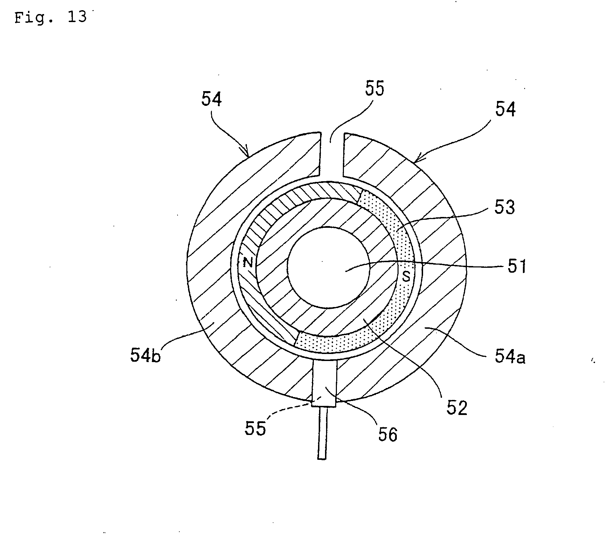

There is known, as a non-contact type rotation angle detection device, a configuration as disclosed in, e.g., Japanese Patent No. 2842482, in which a change in flux caused by a magnet attached to an object to be detected is caught to detect the rotation angle of the object. FIG. 13 is an explanatory view showing a general configuration of such a non-contact type rotation detection device.

In a rotation angle detection device of FIG. 13, a rotor core 52 of magnetic material is attached to a shaft 51 which is subject to rotation angle detection. A dipole ring magnet 53 is fixed to the inner circumference of the rotor core 52. A stator core 54 is disposed outside the ring magnet 53 in a coaxial manner with the shaft 51. The stator core 54 is formed of a magnetic material and is constituted by two core pieces 54a, 54b each having a semicircular cross-section. A Hall IC 56 is disposed in a gap 55 between the core pieces 54a, 54b.

As shown in FIG. 13, the stator core 54 forms a magnetic path for directing the flux of the ring magnet 53, and a voltage signal corresponding to the density of the interlinkage flux is output from the Hall IC 56. When the ring magnet 53 rotates together with the shaft 51, the flux amount passing through the Hall IC 56 changes to change the output signal from the Hall IC 56. The change in the output signal occurs in response to a change in the rotation angle of the shaft 51, and the signal changes almost linearly with the rotation of the shaft 51. This makes it possible to detect the rotation angle of the shaft 51 based on a signal from the Hall IC 56.

In recent years, so-called an electronically-controlled throttle apparatus which drives an engine throttle valve by a motor has widely been used along with computerization of automobile parts. In the electronically-controlled throttle apparatus, a throttle valve is not mechanically activated by a conventional accelerator wire, but controlled by an electrical signal. The accelerator pedal depression amount is electrically detected by a potentiometer or the like and, in accordance with the detected value, a motor is driven to open/close the throttle valve.

The rotation angle detection device as shown in FIG. 13 is also used for detecting the open degree of the throttle valve in such an electronically-controlled throttle apparatus. In this case, a throttle valve is attached to the shaft 51, and the open degree of the throttle valve is detected based on the rotation angle of the shaft 51. Operational control for a motor is performed based on the detected valve open degree. At this time, the valve open degree corresponding to the accelerator pedal depression amount or engine load is set.
[Patent Document 1]
   Japanese Patent No. 2842282
[Patent Document 2]
   Jpn. Pat. Appln. Laid-Open Publication No. 8-35809
[Patent Document 3]
   Jpn. Pat. Appln. Laid-Open Publication No. 2001-4315
[Patent Document 4]
   Jpn. Pat. Appln. Laid-Open Publication No. 2001-59702
[Patent Document 5]
   Jpn. Pat. Appln. Laid-Open Publication No. 2001-188003
[Patent Document 6]
   Jpn. Pat. Appln. Laid-Open Publication No. 2001-208510
[Patent Document 7]
   Jpn. Pat. Appln. Laid-Open Publication No. 2001-289609
[Patent Document 8]
   Jpn. Pat. Appln. Laid-Open Publication No. 2001-289610
[Patent Document 9]
   Jpn. Pat. Appln. Laid-Open Publication No. 2001-303979
[Patent Document 10]
   Jpn. Pat. Appln. Laid-Open Publication No. 2001-317909
[Patent Document 11]
   Jpn. Pat. Appln. Laid-Open Publication No. 2001-211201
[Patent Document 12]
   Jpn. Pat. Appln. Laid-Open Publication No. 2001-257723
[Patent Document 13]
   Japanese Patent Application No. 2002-258901
[Patent Document 14]
   Japanese Patent Application No. 2002-83092

### Disclosure of Invention

However, in the rotation angle detection device having the configuration as shown in FIG. 13, output characteristics are structurally vulnerable to center displacement. That is, when the centers of the stator core 54 and magnet 53 are displaced from each other, the air-gap between them changes with the rotation angle due to core displacement. This makes a change in the amount of the flux passing through the Hall IC 56 non-uniform with respect to the rotation angle, resulting in detection error.

Therefore, in the configuration of the rotation angle detection device shown in FIG. 13, both the rotor core 52 and magnet 53 must be accurately fixed to the shaft 51 in a coaxial manner with respect to the shaft 51, correspondingly increasing assembly man-hour to increase manufacturing cost. While it is possible to omit the rotor core 52 and use the shaft 51 as a magnetic path in order to increase the coaxial accuracy, a limitation on the size of the shaft diameter limits the size of the magnet diameter, so that the travel distance of the magnet in the circumferential direction becomes small, correspondingly reducing the angle detection accuracy.

In the rotation angle detection device for an electronically-controlled throttle apparatus, the rotation angle detection device itself is provided in an engine room. Therefore, in order to efficiently dispose various devices in the narrow space, high layout flexibility is required for the rotation angle detection device itself, and a reduction in the size and thickness thereof is demanded.

An object of the present invention is to reduce the size and thickness of a rotation angle detection device without deteriorating its detection accuracy to increase its layout flexibility.

A rotation angle detection device according to the present invention is characterized by comprising: a yoke member which is formed of a magnetic material rotating in synchronization with a rotary shaft and fixed to a nonmagnetic member attached to the rotary shaft; a magnet which is disposed with a predetermined space apart from the yoke member in the axial direction and has a magnetic pole facing the yoke member on the axial direction edge surface thereof; and a magnetic detection element disposed in a magnetic path which is formed by the magnet and passes through the yoke member.

In the present invention, the yoke member and a magnet pole of the magnet face each other with a predetermined space in the axial direction, so that opposed surfaces between them extend in the radial direction to reduce the axial direction length of the device. Therefore, the thickness of the rotation angle detection device can be reduced to thereby increase the layout flexibility of the device.

In the rotation angle detection device, the magnet may be attached to a fixing member formed of a magnetic material, and the fixing member may have a magnet attachment portion to which the magnet is fixed and a magnetic detection element attachment portion which is magnetically connected to the magnet attachment portion and to which the magnetic detection element is fixed with a predetermined space apart from the yoke member in the axial direction. In this case, the fixing member may be disposed adjacent to the magnet in the axial direction.

In the rotation angle detection device, the magnet may be axially magnetized. This makes it possible to detect the rotation angle of the rotary shaft without using a magnet with radial magnetization in which high accurate magnetization is difficult, thereby reducing manufacturing cost of the rotation angle detection device.

The nonmagnetic member may be a throttle gear for driving a throttle valve which is provided in an electronically-controlled throttle valve of an engine.

Further, a rotation angle detection device is
characterized by comprising: a magnet which rotates in synchronization with a rotary shaft, which has a magnetic pole on the axial direction edge surface thereof, and which is magnetically connected to the rotary shaft; a yoke member which is disposed with a predetermined space apart from the magnet in the axial direction and is formed of a magnetic material facing the magnetic pole of the magnet; and a magnetic detection element disposed in a magnetic path which is formed by the magnet and passes through the yoke member.

In the present invention, the yoke member and a magnet pole of the magnet face each other with a predetermined space in the axial direction, so that opposed surfaces between them extend in the radial direction to reduce the axial direction length of the device. Therefore, the thickness of the rotation angle detection device can be reduced to thereby increase the layout flexibility of the device.

In the rotation angle detection device, the magnet may be axially magnetized. This makes it possible to detect the rotation angle of the rotary shaft without using a magnet with radial magnetization in which high accurate magnetization is difficult, thereby reducing manufacturing cost of the rotation angle detection device.

In the rotation angle detection device, the magnetic detection element may be attached to a fixing member formed of a magnetic material, and the yoke member may be attached to the axial direction edge surface of the magnetic detection element.

In the rotation angle detection device, the yoke member and magnet may be formed into a partially cylindrical shape, and the outer diameter of the yoke member may be larger than the outer diameter of the magnet. This makes it possible to suppress a change in the opposed areas between the yoke member and magnet even when center displacement between them occurs. In addition, coaxial accuracy level between the movable side and stationary side can be lowered.

In the rotation angle detection device, opposed surfaces between the yoke member and magnet may extend in the radial direction. Further, opposed areas between the yoke member and magnet may change with a rotation of the rotary shaft, and the change in the opposed areas may change the flux density in the magnetic path.

In the rotation angle detection device, the rotary shaft may be a valve shaft to which a throttle valve in an electronically-controlled throttle valve of an engine is fixed. In this case, the yoke member may be fixed to a gear formed of a nonmagnetic member attached to the valve shaft.

According to the rotation angle detection device of the present invention, the magnet is disposed with a predetermined space apart from the yoke member formed of a magnetic material rotating in synchronization with the rotary shaft in the axial direction, and the magnetic detection element is disposed in the magnetic path formed by the magnet. Accordingly, opposed surfaces between the yoke member and magnet extend in the radial direction to reduce the axial direction length of the device. Therefore, the thickness of the rotation angle detection device can be reduced to thereby increase the layout flexibility of the device.

Further, according to the rotation angle detection device of the present invention, the yoke member formed of a magnetic material is disposed with a predetermined space apart from the magnet rotating in synchronization with the rotary shaft in the axial direction, and the magnetic detection element is disposed in the magnetic path formed by the magnet. Accordingly, opposed surfaces between the yoke member and magnet extend in the radial direction to reduce the axial direction length of the device. Therefore, the thickness of the rotation angle detection device can be reduced to thereby increase the layout flexibility of the device.

Further, the outer diameter of the yoke member is made larger than the outer diameter of the magnet. This makes it possible to suppress a change in the opposed areas between the yoke member and magnet even when center displacement between them occurs, so that a change in the output characteristics due to the center displacement between the movable side and stationary side hardly occurs. Thus, it is possible to stably and accurately detect the angle. In addition, coaxial accuracy level between the movable side and stationary side can be lowered, resulting in a reduction in manufacturing cost.

### Brief Description of the Drawings

[FIG. 1] Explanatory views showing a configuration of a rotation angle detection device according to a first embodiment of the present invention; (a) is a front view, and (b) is a bottom view.
[FIG. 2] An exploded perspective view of the rotation angle detection device of FIG. 1.
[FIG. 3] Explanatory views showing a configuration of a rotation angle detection device according to a second embodiment of the present invention; (a) is a front view, and (b) is a bottom view.
[FIG. 4] A cross-sectional view showing a configuration of an electronically-controlled throttle valve using a rotation angle detection device according to a third embodiment of the present invention.
[FIG. 5] A bottom view of the electronically-controlled throttle valve of FIG. 4.
[FIG. 6] Explanatory views schematically showing a configuration of the rotation angle detection device of FIG. 4; (a) is a front view, and (b) is a cross-sectional view taken along A-A line of (a).
[FIG. 7] is an explanatory view showing configurations of components of the rotation angle detection device shown in FIG. 6.
[FIG. 8] Explanatory views schematically showing a configuration of a rotation angle detection device in the case where the rotation angle detection device using two magnets is used for the electronically-controlled throttle valve of FIG. 4; (a) is a front view of the rotation angle detection device, and (b) is a cross-sectional view taken along B-B line of (a).
[FIG. 9] An explanatory view showing configurations of components of the rotation angle detection device shown in FIG. 8.
[FIG. 10] An exploded perspective view of a rotation angle detection device according to a fifth embodiment of the present invention.
[FIG. 11] Explanatory views schematically showing a configuration of a rotation angle detection device for the electronically-controlled throttle valve according to a sixth embodiment of the present invention; (a) is a front view of the rotation angle detection device, and (b) is a cross-sectional view taken along A-A line of (a).
[FIG. 12] An explanatory view showing configurations of components of the rotation angle detection device shown in FIG. 11.
[FIG. 13] An explanatory view showing a general configuration of a non-contact type rotation angle detection device.

### Explanation of Reference Symbols

- 1:: Rotation angle detection device
- 2:: Rotary shaft
- 3:: Yoke plate (yoke member)
- 3a, 3b:: Yoke plate
- 3p:: Axial direction edge surface
- 4:: Rotor core
- 4p:: Axial direction edge surface
- 5:: Magnet
- 5a, 5b:: Magnet
- 5p, 5q:: Axial direction edge surface
- 6:: Fixing plate (fixing member)
- 6a:: Arc portion
- 6b:: Chord portion
- 7:: Magnet attachment portion
- 8a,: 8b: Pole piece
- 9a,: 9b: Hall IC (magnetic detection element)
- 10:: Rotation angle detection device
- 11:: throttle valve
- 12:: Valve shaft
- 13:: Brushless motor
- 14:: Housing
- 15:: Cover
- 16:: Circuit board
- 17:: Rotation angle detection device
- 18:: Connection portion
- 19:: Intermediate gear
- 20:: Gear shaft
- 21:: Throttle gear
- 22:: Gear
- 23:: Gear
- 24:: Gear
- 25:: Speed reduction mechanism
- 26:: Rotor shaft
- 27:: Rotation angle detection device
- 28:: Rotation angle detection device
- 29:: Rotation angle detection device
- 51:: Shaft
- 52:: Rotor core
- 53:: Ring magnet
- 54:: Stator core
- 54a:: Core piece
- 55:: Gap
- 56:: Hall IC
- G₁:: Air gap
- G₂:: Air gap
- G₃:: Air gap
- M:: Magnetic path
- M₁:: Magnetic path
- M₂:: Magnetic path
- R₁:: Outer diameter of yoke plate
- R₂:: Outer diameter of magnet
- R₃:: Inner diameter of yoke plate
- R₄:: Inner diameter of magnet
- S₁,: S₂: Opposed area

### Best Mode for Carrying Out the Invention

Embodiments of the present invention will be described below in detail with reference to the accompanying drawings.

### [First Embodiment]

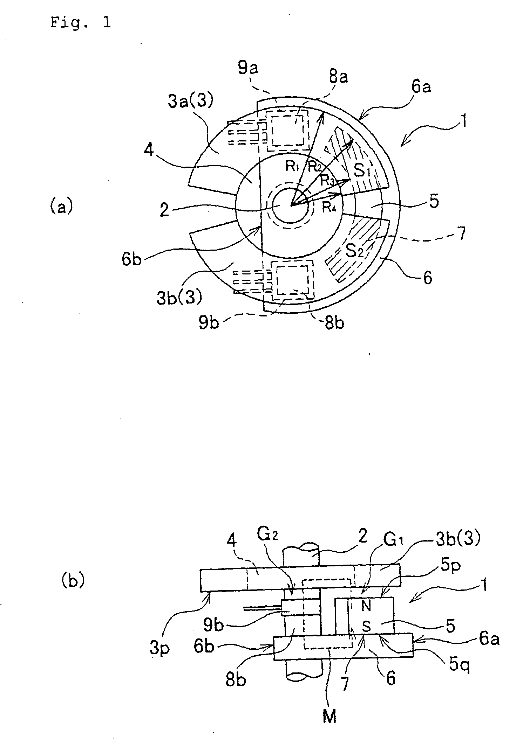

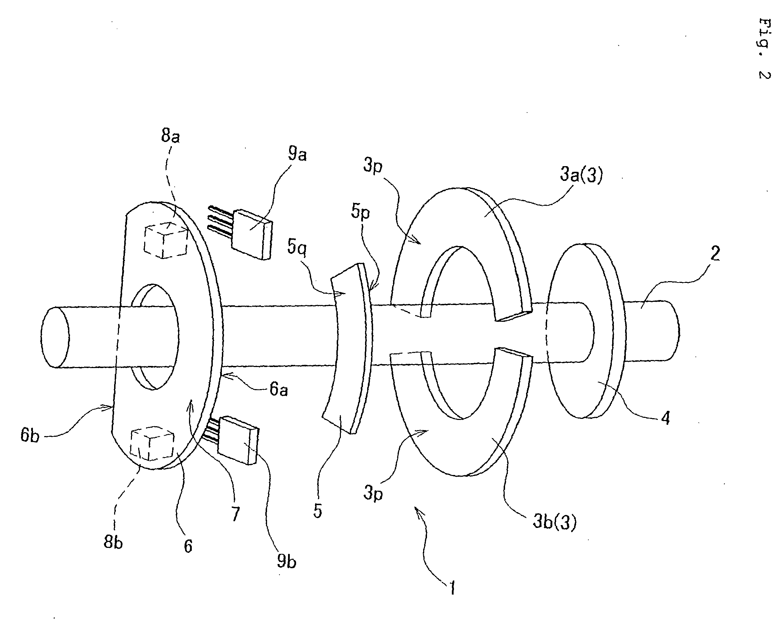

FIG. 1 is explanatory views showing a configuration of a rotation angle detection device according to a first embodiment of the present invention. FIG. 1 (a) is a front view of the rotation angle detection device, and FIG. 1 (b) is a bottom view thereof. FIG. 2 is an exploded perspective view of the rotation angle detection device of FIG. 1. As shown in FIG. 1, yoke plates (yoke members) 3a, 3b rotating in synchronization with a rotary shaft 2 are provided in a rotation angle detection device 1. Each of the yoke plates 3a, 3b is formed of a magnetic material and formed in a partially cylindrical shape having a central angle of about 160°. The yoke plates 3a, 3b are circumferentially fixed to the rotary shaft 2 through a rotor core 4 of nonmagnetic material in even shares.

A magnet 5 having a sector shape is disposed on the axial direction edge surface 3p side of the yoke plates 3a, 3b with a predetermined space apart from the yoke plates 3a, 3b. The magnet 5 is fixed to a fixing plate (fixing member) 6 of magnet material to constitute a stationary side relative to a rotary side constituted by the yoke plates 3a, 3b. The magnet 5 is formed in a partially cylindrical shape having a central angle of 120° and is axially magnetized such that its edge surfaces 5p, 5q opposed in the axial direction have different magnetic polarities. Magnetization in the axial direction is relatively easy and, accordingly, it is possible to reduce manufacturing cost of the magnet 5 more than the cost involving the manufacturing of a magnet with radial magnetization in which high accurate magnetization is difficult. The edge surface 5p of the magnet 5 faces both the edge surfaces 3p of the yoke plates 3a, 3b and, between the surface 5p and surfaces 3p, an air gap G1 is formed. The air gap G1 is kept unchanged irrespective of the rotation of the yoke plates 3a, 3b.

The outer diameter R1 of the yoke plates 3a, 3b is larger than the outer diameter R2 of the magnet 5. The inner diameter R3 of the yoke plates 3a, 3b is smaller than the inner diameter R4 of the magnet 5 (R1 > R2, R3 < R4). That is, the yoke plates 3a, 3b are so formed as to entirely cover the area of the magnet 5. Therefore, even when center displacement between the yoke plates 3a, 3b and magnet 5 occurs, the opposed areas between them do not change. Further, the center displacement does not affect the air-gap G1 because of structural reasons. Therefore, a change in the output characteristics due to the center displacement between the movable side and stationary side hardly occurs in the rotation angle detection device 1, enabling accurate and stable angle detection. Further, coaxial accuracy level between the movable side and stationary side can be lowered to lower the level of accuracy required for individual parts as well as to make assembly work easier, resulting in a reduction in manufacturing cost.

While the stator core 54 is provided outside the magnet 53 in the rotation angle detection device shown in FIG. 13, it is possible to omit the stator core in the configuration of the rotation angle detection device 1. Therefore, in the case where the devices of FIGS. 1 and 13 are designed to have the same outer diameter, the outer diameter R2 of the magnet 5 can be made larger than that of the magnet 53. Accordingly, the travel distance of the magnet 5 in the circumferential direction associated with the rotation of the rotary shaft 2 becomes larger than that of the magnet 53 of FIG. 13, correspondingly increasing the rotation angle detection accuracy. Further, in the case where the outer diameter R2 of the magnet 5 is made equal to the outer diameter of the magnet 53, it is possible to reduce the size of the device by the size corresponding to the stator core 54 without deteriorating the accuracy.

Further, in the configuration of the rotation angle detection device of FIG. 13, the magnet 53 and stator core 54 are formed into substantially a cylindrical shape and their opposed surfaces extend in the axial direction, with the result that the axial direction length of the device tends to increase. On the other hand, in the configuration of the rotation angle detection device 1, the opposed surfaces of the yoke plates 3a, 3b and magnet 5 extend in the radial direction, making it possible to reduce the axial direction length of the device. As a result, it is possible to reduce the thickness of the rotation angle detection device, thereby increasing layout flexibility of the device.

The edge surface 5q of the magnet 5 is fixed to the fixing plate 6. The fixing plate 6 is formed into substantially a semilunar shape having a central angle of about 200° and is fixed to the chassis of the device. A magnet attachment portion 7 is provided along a circular arc portion 6a of the fixing plate 6. The magnet 5 is fixed to the magnet attachment portion 7.

Pole pieces (magnetic detection element attachment portions) 8a, 8b are so formed near a chord portion 6b of the fixing plate 6 as to protrude in the axial direction. Each of the pole pieces 8a, 8b is also formed of a magnetic material and magnetically connected to the magnet attachment portion 7. Hall ICs 9a, 9b are attached to the leading end of the pole pieces 8a, 8b. Each of the Hall ICs 9a, 9b is an IC obtained by integrating a Hall element and a signal amplifier circuit. In this case, a linear output Hall IC is used. The Hall ICs 9a, 9b are space apart from the yoke plates 3a, 3b in the axial direction, so that an air gap G2 is formed between the Hall ICs 9a, 9b and edge surface 3p of the yoke plates 3a, 3b. In this example, G1 is set equal to G2.

As shown in FIG. 1 (b), in the rotation angle detection device 1, a magnetic path M is formed circulating from the magnet 5, through the yoke plates 3a, 3b, pole pieces 8a, 8b, fixing plate 6 to the magnet 5. The Hall ICs 9a, 9b are disposed in the magnetic path M, and a signal output from the Hall IC changes in accordance with the flux change. In the magnetic path M, the flux is converged by the pole pieces 8a, 8b to pass through the Hole ICs 9a, 9b. Therefore, it is possible to efficiently guide the flux of the magnet 5 to the Hole ICs 9a, 9b, improving the accuracy for detecting the flux change.

In the rotation angle detection device 1, the rotation of the rotary shaft 2 changes the opposed areas S1, S2 between the magnet 5 and yoke plates 3a, 3b. For example, when the rotary shaft 2 rotates clockwise in FIG. 1 (a), S1 increases and S2 decreases. Then, on the side (S1 side) where the opposed area increases, the flux induced in the yoke plate 3 increases to increase the flux in the magnetic path M. Contrary, on the side (S2 side) where the opposed area decreases, the flux in the magnetic path M decreases. That is, when the rotary shaft 2 rotates, the density of magnetic flux passing through the Hall ICs 9a, 9b in the magnetic path M also linearly changes in proportion to the rotation angle. The Hall ICs 9a, 9b catch this change and output a linear voltage signal proportional to the rotation angle of the rotary shaft 2. The rotation angle of the rotary shaft 2 is then calculated based on a relationship between the voltage signal value and rotation angle.

### [Second Embodiment]

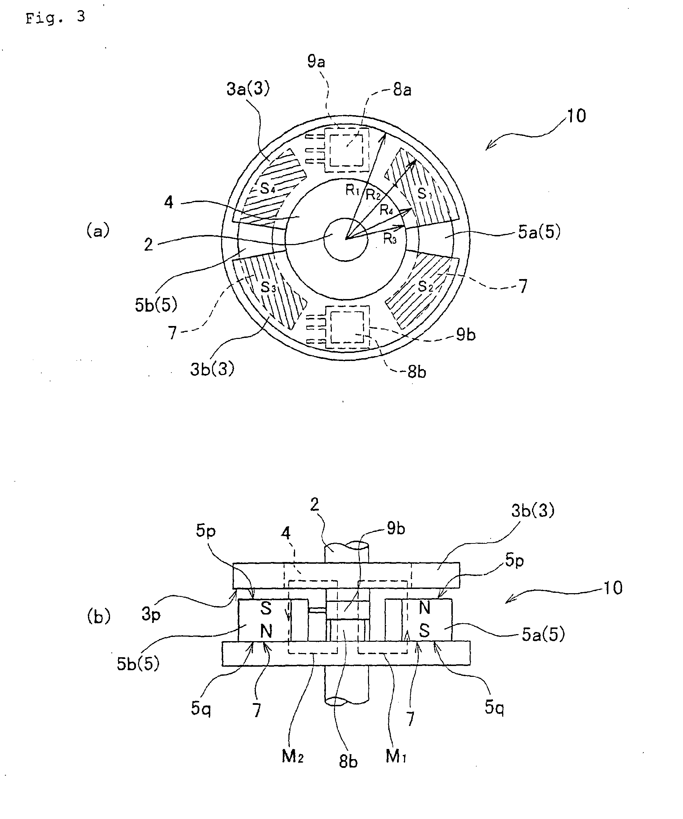

FIG. 3 is explanatory views showing a configuration of a rotation angle detection device according to a second embodiment of the present invention. FIG. 3 (a) is a front view of the rotation angle detection device, and FIG. 3 (b) is a bottom view thereof. In the following embodiments, the same reference numerals as the first embodiment are given to the components which are common to the first embodiment, and the overlapped description is omitted.

As shown in FIG. 3, two magnets 5 (5a, 5b) are provided in a rotation angle detection device 10 according to the second embodiment. The magnets 5a, 5b are so magnetized as to have magnetic poles of different polarities alternately arranged in the rotational direction. The fixing plate 6 is formed not into a semilunar shape, but into a circular shape for placement of the two magnets. In this configuration, as shown in FIG. 3(b), two separate magnetic paths M1, M2 are formed by the magnets 5a, 5b. That is, the magnetic paths M1, M2 are formed each circulating from the magnet 5a, 5b, through the yoke plates 3a, 3b, pole pieces 8a, 8b, fixing plate 6 to the magnet 5a, 5b. The Hall ICs 9a, 9b are disposed in the magnetic paths M1, M2. The use of the two magnets 5 allows the flux of the two separate magnetic paths to pass through the Hall ICs 9a, 9b, correspondingly increasing the flux amount. Therefore, it is possible to sensitively grasp the flux change, thereby increasing the detection accuracy of the rotation angle.

In the rotation angle detection device 10, the rotation of the rotary shaft 2 changes the opposed areas S1, S2, S3, S4 between the magnet 5a, 5b and yoke plates 3a, 3b. For example, when the rotary shaft 2 rotates clockwise in FIG. 3 (a), S1, S3 increase and S2, S4 decrease. Then, on the sides (S1, S3 sides) where the opposed areas increase, the flux induced in the yoke plate 3 increases. Contrary, on the sides (S2, S4 sides) where the opposed areas decrease, the flux induced in the yoke plate 3 decreases. When this point is seen about Hall ICs 9a, 9b, in the Hall IC 9a, the flux increases on the magnetic path M1 side and decreases on the magnetic path M2 side. Thus, assuming that the flux traveling along the magnetic path M1 is positive side, the flux passing through the Hall IC 9a changes in the positive direction. Contrary, in the Hall IC 9b, the flux decreases on the magnetic path M1 side and increases on the magnetic path M2 side, so that the flux passing through the Hall IC 9b changes in the negative direction. The above change in the flux causes the Hall ICs 9a, 9b to output a linear output signal proportional to the rotation angle of the rotary shaft 2 and, thereby, the rotation angle of the rotary shaft 2 is detected.

### [Third Embodiment]

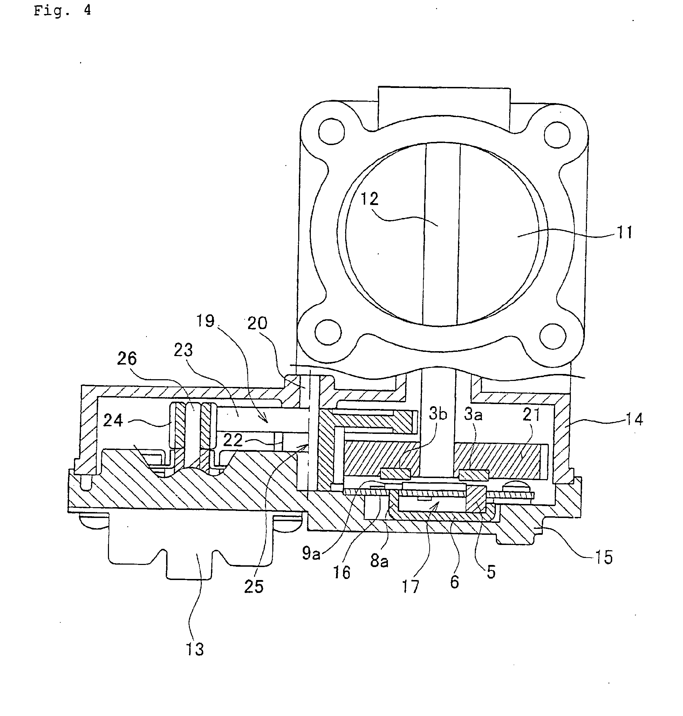

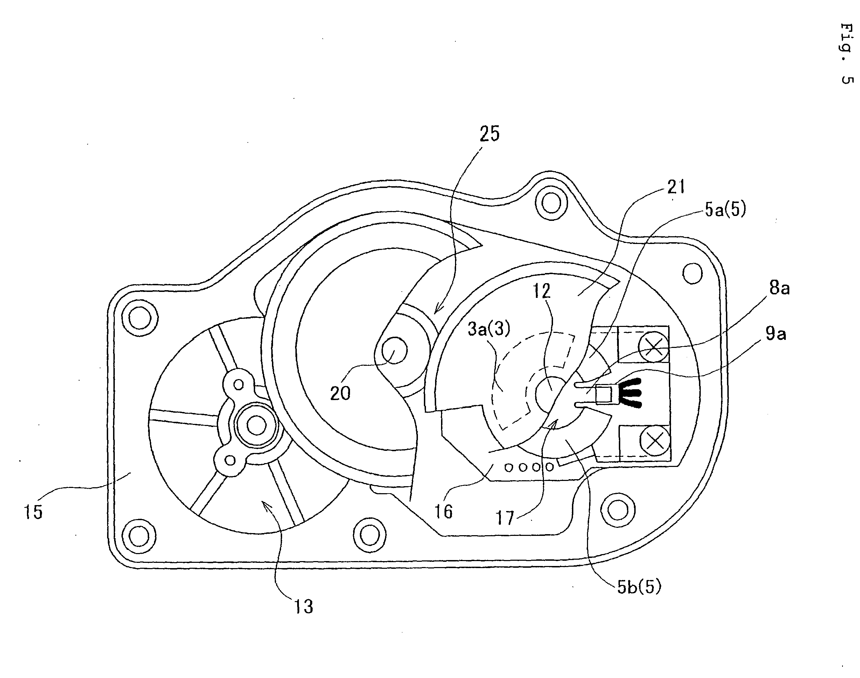

FIG. 4 is a cross-sectional view showing a configuration of an electronically-controlled throttle valve using a rotation angle detection device according to a third embodiment. FIG. 5 is a bottom view of the electronically-controlled throttle valve of FIG. 4. The electronically-controlled throttle valve shown in FIGS. 4 and 5 is disposed in the inlet path of an engine. Intake air flow of the engine is controlled by the open degree of the throttle valve 11. The throttle valve 11 is fixed to the valve shaft (rotary shaft)12 and driven by a brushless motor 13 (hereinafter, abbreviated as motor 13) through a speed-reduction mechanism 25 constituted by gears 21 to 24.

The valve shaft 12 is pivotably supported by a not shown bearing fixed to a metal housing 14. A plastic cover 15 is attached to the lower portion of the housing 14, as shown in FIG. 4. A circuit board 16 is fixed inside the cover 15. A torsion coil spring is attached to the throttle gear 21 fixed to the valve shaft 12. The throttle valve 11 automatically returns to its totally closed position by a biasing force of the torsion coil spring.

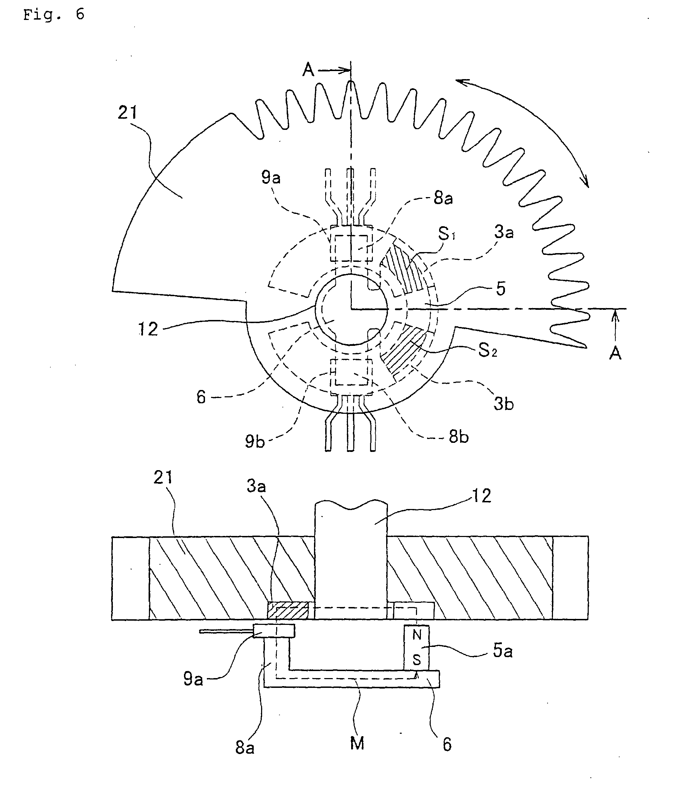

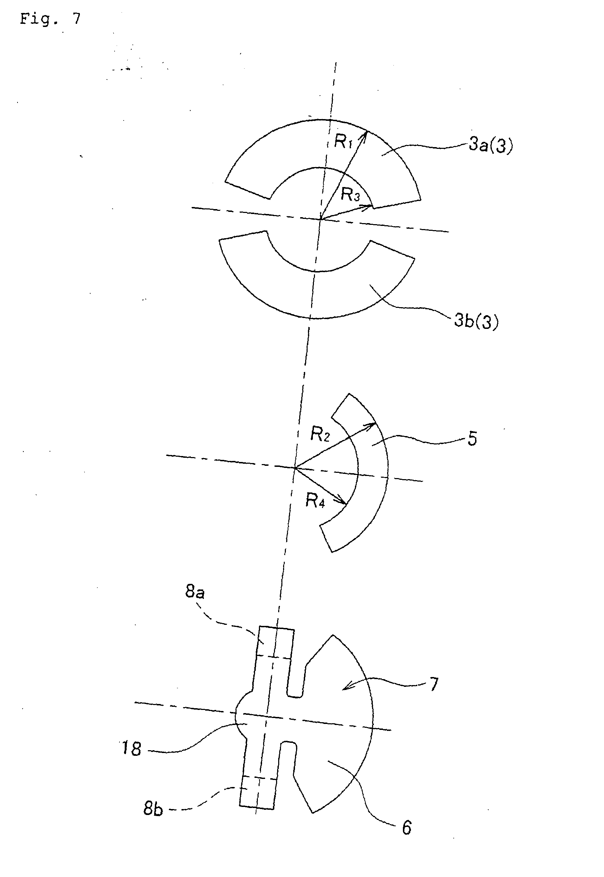

A rotation angle detection device 17 which detects the open degree of the throttle valve 11 is provided in one end portion of the valve shaft 12. FIG. 6 is explanatory views schematically showing a configuration of the rotation angle detection device 17. FIG. 6 (a) is a front view of the rotation angle detection device 17, and FIG. 6 (b) is a cross-sectional view taken along A-A line of FIG. 6 (a). FIG. 7 is an explanatory view showing configurations of components of the rotation angle detection device 17.

Like the rotation angle detection device 1 of FIG. 1, the rotation angle detection device 17 includes the yoke plates 3a, 3b, magnet 5, and fixing plate 6. In this example, the yoke plates 3a, 3b are fixed by being embedded in the throttle gear 21 formed of a nonmagnetic material such as plastic and rotates in synchronization with the valve shaft 12. The fixing plate 6 is fixed to the cover 15 together with the circuit board 16. In this case, the yoke plates 3a, 3b can be insert-molded into the throttle gear 21, reducing assembly man-hour and increasing space efficiency.

An air gap G1 is formed between the yoke plates 3a, 3b and magnet 5 also in the rotation angle detection device 17. The outer diameter R1 of the yoke plates 3a, 3b is larger than the outer diameter R2 of the magnet 5. The inner diameter R3 of the yoke plates 3a, 3b is smaller than the inner diameter R4 of the magnet 5 (R1 > R2, R3 < R4). The magnet attachment portion 7, pole pieces 8a, 8b, and a connection portion 18 connecting the magnet attachment portion 7 and pole pieces 8a, 8b are provided on the fixing plate 6. The magnet attachment portion 7 and pole pieces 8a, 8b are magnetically connected to each other through the connection portion 18. The hall ICs 9a, 9b are attached to the leading end of the pole pieces 8a, 8b. An air gap G2 is formed between the Hall ICs 9a, 9b and yoke plates 3a, 3b.

The Hall ICs 9a, 9b are disposed in a magnetic path M circulating from the magnet 5, through yoke plates 3a, 3b, pole pieces 8a, 8b, fixing plate 6, to the magnet 5. When the valve shaft 12 rotates, the yoke plates 3a, 3b rotate together with the throttle gear 21 to change opposed areas S1, S2 between the magnet 5 and yoke plates 3a, 3b. Accordingly, the flux density in the magnetic path M linearly changes in proportion to the rotation angle to cause the Hall ICs 9a, 9b to output a linear voltage signal proportional to the rotation angle of the valve shaft 12.

The motor 13 is a brushless motor of inner rotor type. A gear 24 is formed on a rotor shaft 26 of the motor 13 and is engaged with a gear 23 of an intermediate gear 19. The intermediate gear 19 is rotatably supported by a gear shaft 20. A gear 22 is formed integrally with the gear 23 on the intermediate gear 19 and is engaged with the throttle gear 21. With the above configuration, the rotation of the rotor shaft 26 in the motor 13 is transmitted to the valve shaft 12 while being decelerated.

In such an electronically-controlled throttle valve, the valve shaft 12 rotates at angles from 0° to about 90° in accordance with a totally closed state/totally open state of the throttle valve 11, and the flux density of the magnetic path M accordingly changes. A voltage signal is output from the Hall ICs 9a, 9b in accordance with the change in the flux density and is then transmitted to a control unit (CPU). The control unit stores, in the form of, e.g., a table, the output change of the Hall ICs 9a, 9b in association with the rotation angle of the valve shaft 12. While referring to the table, the control unit calculates the rotation angle of the valve shaft 12, i.e., the open degree of the throttle valve 11 based on the output change of the Hall ICs 9a, 9b.

### [Fourth Embodiment]

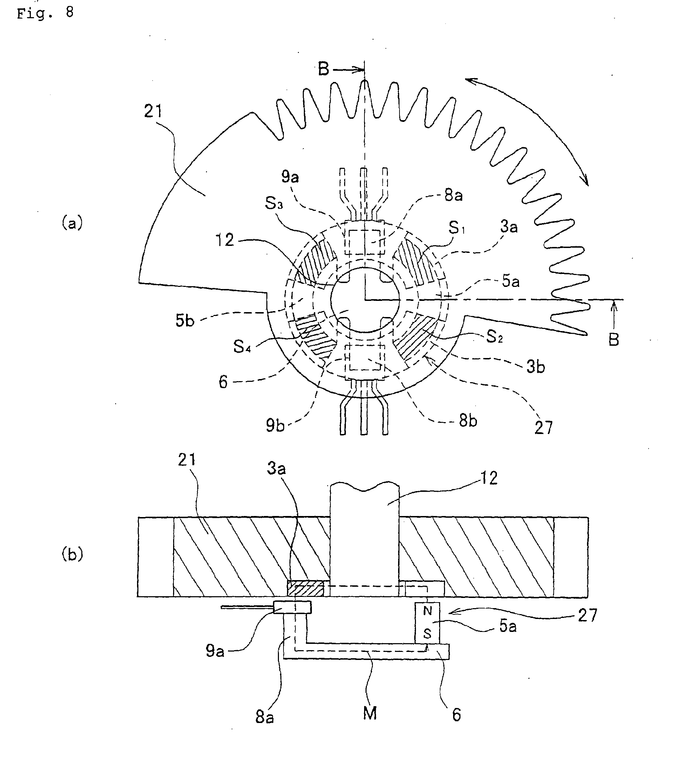

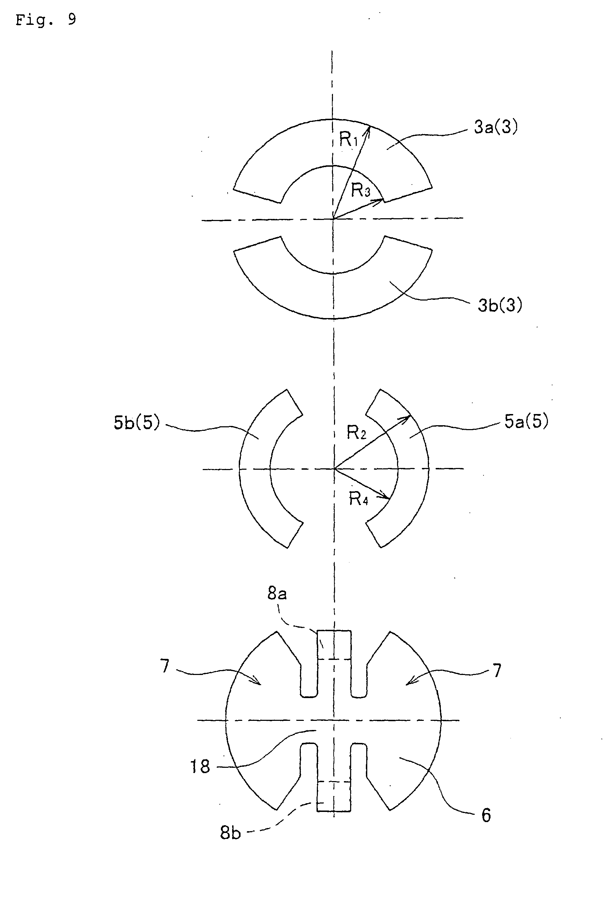

The configuration of the rotation angle detection device according to the above mentioned second embodiment, in which two magnets 5 are used, can be applied to the electronically-controlled throttle valve exemplified in FIGS. 4 and 5. FIG. 8 is explanatory views schematically showing a configuration of a rotation angle detection device in the case where the rotation angle detection device using two magnets is used for the electronically-controlled throttle valve according to the third embodiment. FIG. 8 (a) is a front view of the rotation angle detection device 27, and FIG. 8 (b) is a cross-sectional view taken along A-A line of FIG. 8 (a). FIG. 9 is an explanatory view showing configurations of components of the rotation angle detection device 27.

As shown in FIGS. 8 and 9, two magnets 5 (5a, 5b) are provided in the rotation angle detection device 27 according to the fourth embodiment. The magnets 5a, 5b are so magnetized as to have magnetic poles of different polarities alternately arranged in the rotational direction. Two magnet attachment portions 7 are symmetrically provided on the fixing plate 6 with respect to the connection portion 18 for placement of the two magnets. As is the case with the second embodiment, two separate magnetic paths M1, M2 are formed by the magnets 5a, 5b. The Hall ICs 9a, 9b are disposed in the magnetic paths M1, M2.

In the rotation angle detection device 27, the rotation of the valve shaft 12 changes the opposed areas S1, S2, S3, S4 between the magnet 5a, 5b and yoke plates 3a, 3b. Accordingly, as described above, the flux passing through the Hall ICs 9a, 9b changes, causing the Hall ICs 9a, 9b to output a linear voltage signal proportional to the rotation angle of the valve shaft 12 and, thereby, the rotation angle of the valve shaft 12 is detected and the open degree of the valve shaft 11 is calculated.

### [Fifth Embodiment]

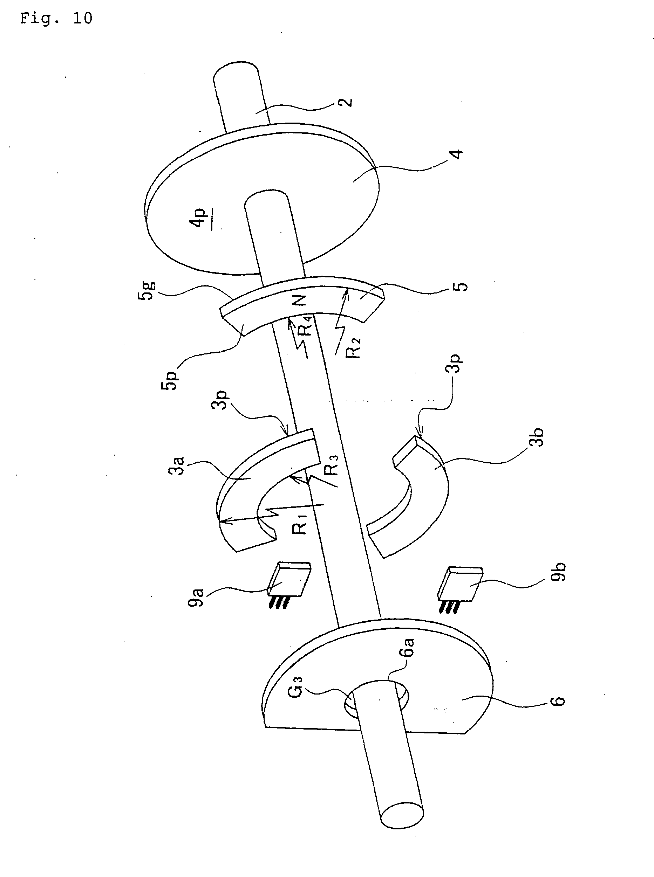

Next, as a fifth embodiment of the present invention, a rotation angle detection device having a configuration in which the magnet is disposed on the movable side, contrary to the abovementioned embodiments will be described. FIG. 10 is an exploded perspective view of a rotation angle detection device 28 according to the fifth embodiment of the present invention. In the rotation angle detection device 28, the magnet 5 rotates in synchronization with the rotary shaft 2. The rotor core 4 formed of a magnetic material is attached to the rotary shaft 2. The magnet 5 is fixed to the axial direction edge surface 4p of the rotor core 4 and magnetically connected to the rotary shaft 2. The magnet 5 is formed into a partially cylindrical shape having a center angle of 120° and is axially magnetized such that its edge surfaces 5p, 5q opposed in the axial direction have different magnetic polarities.

The yoke plates (yoke members) 3a, 3b are provided on the axial direction edge surface 5p side of the magnet 5 with a predetermined space apart from the magnet 5. Each of the yoke plates 3a, 3b is formed of a magnetic material and formed in a partially cylindrical shape having a central angle of about 160°. The yoke plates 3a, 3b are circumferentially arranged in even shares. The edge surface 5p of the magnet 5 faces both the edge surfaces 3p of the yoke plates 3a, 3b and, between the surface 5p and surfaces 3p, an air gap is formed. The outer diameter R1 of the yoke plates 3a, 3b is larger than the outer diameter R2 of the magnet 5. The inner diameter R3 of the yoke plates 3a, 3b is smaller than the inner diameter R4 of the magnet 5 (R1 > R2, R3 < R4).

The yoke plates 3a, 3b are fixed onto the Hall ICs 9a, 9b. The Hall ICs 9a, 9b are fixed to the fixing plate 6. The fixing plate 6 is formed into substantially a semilunar shape having a central angle of about 200° and is fixed to the chassis of the device. A shaft hole 6a is formed in the center of the fixing plate 6. The rotary shaft 2 is inserted through the shaft hole 6a. An air-gap G3 is formed between the rotary shaft 2 and peripheral wall of the shaft hole 6a.

In the rotation angle detection device 28, a magnetic path is formed circulating from the magnet 5, through the yoke plates 3a, 3b, fixing plate 6, rotary shaft 2, rotor core 4 to the magnet 5. The Hall ICs 9a, 9b are disposed in the magnetic path. The rotation of the rotary shaft 2 changes the opposed areas between the magnet 5 and yoke plates 3a, 3b. Accordingly, the density of magnetic flux passing through the Hall ICs 9a, 9b in the magnetic path linearly changes in proportion to the rotation angle. The Hall ICs 9a, 9b catch this change and output a linear voltage signal proportional to the rotation angle of the rotary shaft 2. The rotation angle of the rotary shaft 2 is then calculated based on a relationship between the voltage signal value and rotation angle.

### [Sixth Embodiment]

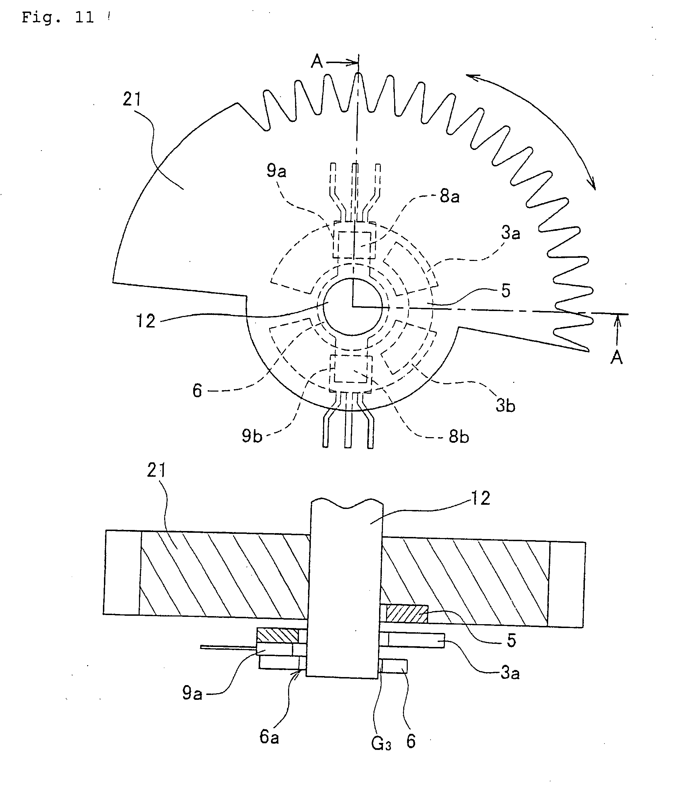

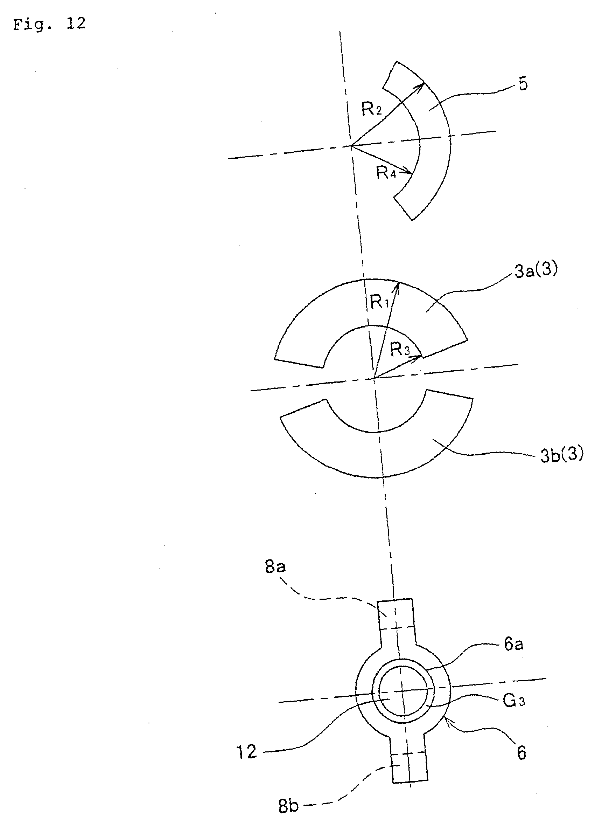

It is possible to use the rotation angle detection device having the configuration shown in FIG. 10 in the electronically-controlled throttle valve. FIG. 11 is explanatory views schematically showing a configuration of a rotation angle detection device 29 for the electronically-controlled throttle valve according to a sixth embodiment of the present invention. FIG. 11 (a) is a front view of the rotation angle detection device 29, and FIG. 11 (b) is a cross-sectional view taken along A-A line of FIG. 11 (a). FIG. 12 is an explanatory view showing configurations of components of the rotation angle detection device 29.

Like the rotation angle detection device 28 of FIG. 10, the rotation angle detection device 29 includes the yoke plates 3a, 3b, magnet 5, and fixing plate 6. In this example, the magnet 5 is fixed by being embedded in the throttle gear 21 formed of a magnetic material such as metal. The throttle gear 21 is fixed to the valve shaft 12. The magnet 5 is magnetically connected to the valve shaft 12 and rotates in synchronization with the valve shaft 12. The fixing plate 6 is fixed to the cover 15 together with the circuit board 16.

An air gap G1 is formed between the yoke plates 3a, 3b and magnet 5 also in the rotation angle detection device 29. The outer diameter R1 of the yoke plates 3a, 3b is larger than the outer diameter R2 of the magnet 5. The inner diameter R3 of the yoke plates 3a, 3b is smaller than the inner diameter R4 of the magnet 5 (R1 > R2, R3 < R4). The yoke plates 3a, 3b are fixed onto the Hall ICs 9a, 9b. The Hall ICs 9a, 9b are fixed to the fixing plate 6. A shaft hole 6a is formed in the center of the fixing plate 6. The valve shaft 12 is inserted through the shaft hole 6a. An air-gap G3 is formed between the valve shaft 12 and peripheral wall of the shaft hole 6a.

The Hall ICs 9a, 9b are disposed in a magnetic path M circulating from the magnet 5, through the yoke plates 3a, 3b, fixing plate 6, valve shaft 12, throttle gear 21 to the magnet 5. When the valve shaft 12 rotates, the magnet 5 rotates together with the throttle gear 21 to change opposed areas S1, S2 between the magnet 5 and yoke plates 3a, 3b. Accordingly, the flux density in the magnetic path M linearly changes in proportion to the rotation angle to cause the Hall ICs 9a, 9b to output a linear voltage signal proportional to the rotation angle of the valve shaft 12. The rotation angle of the rotary shaft 2 is then calculated based on a relationship between the voltage signal value and rotation angle.

The present invention is not limited to the above embodiments and various changes and modifications can be made within the spirit and scope of the present invention.

For example, the center angle of the yoke plates 3a, 3b, or magnet 5 is just an example and may be appropriately be changed depending on the angle range to be detected. Further, although the two Hall ICs are used in a redundant design in the above embodiments, it is possible to detect the rotation angle using only one Hall IC.

Although the magnet 5 is embedded in the throttle gear 21 of magnetic material in the sixth embodiment, another configuration may be used in which a plate of magnetic material fixed to the valve shaft 12 is fixed to a throttle gear of nonmagnetic material such as plastic, and the magnet 5 is attached to the plate.

The rotation angle detection device has been used in detecting the open degree of the electronically-controlled throttle valve in the above embodiments. However, the application range of the present invention is not limited to this, but the present invention can widely be applied to the rotation angle detection for a rotating body such as a motor rotary shaft.

## Claims

1. A rotation angle detection device **characterized by** comprising:
a yoke member which is formed of a magnetic material rotating in synchronization with a rotary shaft and fixed to a nonmagnetic member attached to the rotary shaft;
a magnet which is disposed with a predetermined space apart from the yoke member in the axial direction and has a magnetic pole facing the yoke member on the axial direction edge surface thereof; and
a magnetic detection element disposed in a magnetic path which is formed by the magnet and passes through the yoke member.

2. The rotation angle detection device according to claim 1, **characterized in that**
the magnet is attached to a fixing member formed of a magnetic material, and
the fixing member has a magnet attachment portion to which the magnet is fixed and a magnetic detection element attachment portion which is magnetically connected to the magnet attachment portion and to which the magnetic detection element is fixed with a predetermined space apart from the yoke member in the axial direction.

3. The rotation angle detection device according to claim 2, **characterized in that** the fixing member is disposed adjacent to the magnet in the axial direction.

4. The rotation angle detection device according to claim 1, **characterized in that** the magnet is axially magnetized.

5. The rotation angle detection device according to claim 1, **characterized in that** the nonmagnetic member is a throttle gear for driving a throttle valve which is provided in an electronically-controlled throttle valve of an engine.

6. A rotation angle detection device **characterized by** comprising:
a magnet which rotates in synchronization with a rotary shaft, which has a magnetic pole on the axial direction edge surface thereof, and which is magnetically connected to the rotary shaft;
a yoke member which is disposed with a predetermined space apart from the magnet in the axial direction and is formed of a magnetic material facing the magnetic pole of the magnet; and
a magnetic detection element disposed in a magnetic path which is formed by the magnet and passes through the yoke member.

7. The rotation angle detection device according to claim 6, **characterized in that** the magnet is axially magnetized.

8. The rotation angle detection device according to claim 6, **characterized in that**
the magnetic detection element is attached to a fixing member formed of a magnetic material, and
the yoke member is attached to the axial direction edge surface of the magnetic detection element.

9. The rotation angle detection device according to claim 1 or claim 6, **characterized in that**
the yoke member and magnet are formed into a partially cylindrical shape, and
the outer diameter of the yoke member is larger than the outer diameter of the magnet.

10. The rotation angle detection device according to claim 1 or 6, **characterized in that** opposed surfaces between the yoke member and magnet extend in the radial direction.

11. The rotation angle detection device according to claim 1 or 6, **characterized in that**
opposed areas between the yoke member and magnet change with a rotation of the rotary shaft, and
the change in the opposed areas changes the flux density in the magnetic path.

12. The rotation angle detection device according to claim 1 or 6, **characterized in that** the rotary shaft is a valve shaft to which a throttle valve in an electronically-controlled throttle valve of an engine is fixed.
